(19) Europäisches Patentamt
European Patent Office
Office européen des brevets

(11) Veröffentlichungsnummer: **0 247 443 B1**

(12) **EUROPÄISCHE PATENTSCHRIFT**

(45) Veröffentlichungstag der Patentschrift: **25.07.90**

(51) Int. Cl.[5]: **C09D 5/44,** C08G 18/80, C08G 18/08

(21) Anmeldenummer: **87106973.8**

(22) Anmeldetag: **14.05.87**

(54) **Verfahren zur Herstellung von kationischen wasserverdünnbaren Bindemitteln.**

(30) Priorität: **27.05.86 AT 1404/86**

(43) Veröffentlichungstag der Anmeldung: **02.12.87 Patentblatt 87/49**

(45) Bekanntmachung des Hinweises auf die Patenterteilung: **25.07.90 Patentblatt 90/30**

(84) Benannte Vertragsstaaten: **DE ES FR GB IT NL SE**

(56) Entgegenhaltungen:
**EP-A- 0 118 743**
**EP-A- 0 123 880**
**DE-A- 2 125 247**

(73) Patentinhaber: **Vianova Kunstharz Aktiengesellschaft, A-8402 Werndorf(AT)**

(72) Erfinder: **Paar, Willibald, Dr., Richard Wagnergasse 46, A-8010 Graz(AT)**

**EP 0 247 443 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von kationischen wasserverdünnbaren Bindemitteln, welche insbesonders in kathodisch abscheidbaren Überzugsmitteln eingesetzt werden, welche durch teilweise oder vollständig blockierte Polyisocyanatverbindungen vernetzt werden, wobei als Blockierungsmittel Enamine von C-H-aktiven Dicarbonylverbindungen verwendet werden.

Die Vernetzung durch Umurethanisierung von kationischen wasserverdünnbaren Lackbindemitteln, welche auch für die Formulierung von kathodisch abscheidbaren Lacken (K-ET-Lacken) eingesetzt werden, ist aus der Literatur seit langem bekannt. Zu den ersten diesbezüglichen Literaturstellen gehören die DE-OS 20 20 905, die DE-OS 22 52 536, die DE-OS 20 57 799, die US-PS 3,799,854 oder ein Artikel in OFF. DIGEST, Febr. 1960, Seite 213 - 221.

Für alle nach diesem Prinzip unter Verwendung der dort beschriebenen Verkappungsmittel aufgebauten Bindemittel ist die hohe Entblockungstemperatur einer der wesentichen Nachteile. Verkappungsmittel mit niedriger Entblockungstemperatur, z. B. Phenol, wie sie in Lösungsmittelsystemen eingesetzt werden, sind, wie in der US-PS 2,995, 531 ausgeführt wird, im wäßrigen Medium nicht beständig und kommen daher für den vorliegenden Fall nicht in Frage.

Andere Blockierungsmittel mit niedriger Entblockungstemperatur, wie die in der EP-A1-0 118 743 beschriebenen N,N-Dialkylglykolamide, sind in vielen Fällen sublimierende Substanzen, welche entweder in den Lackfilmen verbleiben oder zur Verunreinigung der Einbrennanlagen führen.

Aus AT-PS 383 604 ist bekannt, daß mit NH-funktionellen Enaminen, die aus C-H-aktiven Dicarbonylverbindungen und primären Aminen erhalten werden, blockierte Diisocyanatverbindungen in vorteilhafter Weise bei niedriger Temperatur und in sicherer Weise herstellbar sind. Überdies entstehen bei der Entblockung nur leichtflüchtige Spaltprodukte.

Es wurde nun gefunden, daß diese Enamin-Blockierung von Isocyanaten auch in wäßrigen kationischen Systemen, ohne die bei den üblichen Blockierungsmitteln auftretenden Nachteile, eingesetzt werden kann, wobei als besonderer Vorteil die Möglichkeit der Formulierung von K-ET-Lacken für niedrigere Einbrenntemperaturen im Vordergrund steht.

Die vorliegende Erfindung betrifft demgemäß ein Verfahren zur Herstellung von kationischen wasserverdünnbaren Bindemitteln auf der Basis von Kondensations-, Additions-oder Polymerisationsharzen, welche Hydroxylgruppen und/oder primäre und/oder sekundäre Aminogruppen tragen, welche als Härtungskomponente blockierte Polyisocyanatverbindungen enthalten, welches dadurch gekennzeichnet ist, daß man mit NH-funktionellen, aus C-H-aktiven Dicarbonylverbindungen und Ammoniak und/oder primären Aminen erhaltenen Enaminen partiell blockierte Polysicoyanatverbindungen mit dem Basisharz reagiert und/ oder vollständig mit diesen Enaminen blockierte Polyisocyanatverbindungen mit dem Basisharz kombiniert.

Die Erfindung betrifft weiters die nach diesem Verfahren hergestellten Bindemittel sowie deren Verwendung in kationischen wäßrigen Lackformulierungen, insbesonders in Lackformulierungen für das K-ETL-Verfahren.

Es ist bekannt, NH-funktionelle Enamine aus C-H-aktiven Dicarbonylverbindungen, wie Acetessigester oder Acetylaceton, durch Umsetzung mit primären Aminen oder Ammoniak unter Abspaltung von Wasser herzustellen (siehe z. B. "Organikum", Organisch-chemisches Grundpraktikum, 2. Nachdruck der 15. Auflage, Berlin 1981, VEB Deutscher Verlag der Wissenschaften, Seite 480):

$$R-NH_2 + CH_3-\overset{\overset{O}{\|}}{C}-CH_2-\overset{\overset{O}{\|}}{C}-R_1 \xrightarrow{-H_2O} R-NH-\underset{\underset{CH_3}{|}}{C}=CH-\overset{\overset{O}{\|}}{C}-R_1$$

$$R = H\text{- oder ein Alkylrest; } R_1 = -OC_2H_5 \text{ oder } -CH_3.$$

Die so erhaltenen Enamine reagieren überraschenderweise bereits bei Temperaturen von 20 bis 30°C und erlauben es, in besonders günstiger und sicherer Weise, halbblokkierte Diisocyanate mit niedriger Entblockungstemperatur auf selektive Weise herzustellen, was bei den üblichen Blockierungsmitteln meist nicht möglich ist. Unter Verwendung der üblichen Zinn-Katalysatoren gestattet dieses Vernetzungssystem Einbrenntemperaturen von 120 bis 130°C. Trotzdem ist die Blockierung im wäßrigen Medium stabil.

Als C-H-aktive Dicarbonylverbindungen können neben dem bereits erwähnten Acetylaceton und Acetessigestern auch gegebenenfalls N-substituierte Acetessigsäureamide u. ä. eingesetzt werden.

Die Dicarbonylverbindungen werden zur Bildung der Enamine, unter Kühlung bei 50 bis 70°C mit Ammoniak oder primären Aminen mit 1 bis 8 C-Atomen, vorzugsweise den isomeren Butylaminen, umgesetzt, wobei das Reaktionswasser durch azeotrope Destillation mit Hilfe eines Schleppmittels entfernt wird.

Vorteilhafterweise können auch primäre Amine, welche zusätzlich tertiäre Aminogruppen enthalten, eingesetzt werden. Auf diese Weise ist es möglich, protonierbare Gruppen, welche die Wasserlöslichkeit eines Harzes bedingen oder unterstützen, über das Blockierungsmittel einzuführen. Da diese basischen Gruppen beim Einbrennen abgespalten werden, resultieren Filme, die keine oder eine reduzierte Zahl verbleibender Aminogruppen aufweisen. Als prim.-tert.-Diamine werden vorteilhaft Dialkylaminoalkylamine, wie Dimethyl- oder Diethylaminopropylamin u. ä., eingesetzt.

Für die Herstellung von halbblockierten Diisocyanaten werden bevorzugt Verbindungen, deren Isocyanatgruppen verschiedene Reaktivität aufweisen, eingesetzt. Insbesonders werden dafür handelsübliches Toluylendiisocyanat (mit einem Anteil von ca. 80 % an 2,4-Toluylendiisocyanat) oder Isophorondiisocyanat verwendet.

Für die Herstellung vollblockierter Polyisocyanatverbindungen können selbstverständlich auch alle anderen Di- und höheren Isocyanatverbindungen eingesetzt werden. Beispiele für diese Verbindungen sind den Angeboten der Hersteller für Isocyanatverbindungen oder der Literatur in großer Zahl zu entnehmen. In gleicher Weise können auch blockierte Polyisocyanate durch Umsetzung von mit den Enaminen halbblockierten Diisocyanaten mit Polyolen, erhalten werden.

Für die Herstellung der halbblockierten Diisocyanate wird das Enamin innerhalb von 30 bis 60 Minuten bei 20 bis 30°C unter Kühlung dem vorgelegten Diisocyanat zugegeben. Die Temperatur wird dann bis zum Erreichen des berechneten NCO-Wertes gehalten.

Bei der Herstellung vollblockierter Polyisocyanate erfolgt die gemeinsame Reaktion bei 60 bis 80°C.

Als Basisharze zur Kombination mit den mit den Enaminen halb- oder vollständig blockierten Polyisocyanaten können alle nach Protonierung wasserverdünnbaren Bindemittel, wie sie in großer Zahl aus der Literatur bekannt sind, eingesetzt werden. Voraussetzung ist eine genügende Anzahl von isocyanatreaktiven Funktionen, welche für eine Vernetzung bzw. gegebenenfalls auch für die Reaktion mit den halbblockierten Isocyanatverbindungen zur Verfügung stehen müssen.

Beispiele für solche Basisharze sind Epoxidharz-Amin-Addukte, welche gegebenenfalls in verschiedenster Weise modifiziert sein können, basische Gruppen aufweisende Copolymerisate, modifizierte Phenolether etc.

Der Aufbau der kationischen Bindemittel kann auch aus nichtbasischen Polymeren durch Umsetzung mit halbblockierten Diisocyanaten, die mit Enaminen, welche tertiäre Aminogruppen aufweisen, blockiert sind, erfolgen. Als Polymere können auch in diesem Fall Polyester, Polyaddukte oder Copolymerisate eingesetzt werden, soferne sie über eine ausreichende Anzahl isocyanatfunktioneller Gruppen, vorzugsweise Hydroxylgruppen, verfügen.

Die Formulierung, Herstellung und Verarbeitung entsprechender Lacke auf Basis der erfindungsgemäß hergestellten Bindemittel entspricht der in der Technik üblichen Weise und ist dem Fachmann bekannt. Der Einsatz der erhaltenen wasserverdünnbaren Lacke kann in konventioneller Weise durch Spritzen, Tauchen, Gießen etc. erfolgen. Bevorzugtes Einsatzgebiet ist die K-ET-Lackierung.

Durch die Verwendung der erfindungsgemäßen Enamin-Blokkierung ist bei geeigneter Katalysierung eine Herabsetzung der Einbrenntemperatur auf 130 bis 140°C möglich. Unter diesen Temperaturbedingungen konnten mit den bisher eingesetzten Härtungsmechanismen keine für die Praxis brauchbaren Beständigkeitseigenschaften erzielt werden.

Die folgenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten.

Folgende Abkürzungen werden in den Beispielen verwendet:

ACAC Acetylaceton
ACE Acetessigsäureethylester
ACEA Acetessigsäurediethylamid
AM Ammoniak (als 22-24%ige wäßrige Lösung)
IBA Isobutylamin
EHA 2-Ethylhexylamin
DMAPA Dimethylaminopropylamin
DEAPA Diethylaminopropylamin
TDI Toluylendiisocyanat
(handelsübliches 80/20 Isomerengemisch)
IPDI Isophorondiisocyanat
TMP Trimethylolpropan
TOLA Triethanolamin
DGM Diethylenglykoldimethylether
EGLAC Monoethylenglykolmonoethyletheracetat
EPH I Epoxidharz auf Basis Bisphenol A
(Epoxidäquivalentgewicht ca. 475)

EPH II Epoxidharz auf Basis Bisphenol A
(Epoxidäquivalentgewicht ca. 190)
F 91 Paraformaldehyd, 91 %
DEA Diethylamin

(I) Herstellung der Enamine

Gemäß den in der Tabelle 1 gemachten Angaben werden verschiedene Enamine von Dicarbonylverbindungen hergestellt. Dabei wird die Dicarbonylverbindung in einem mit Rührwerk, Thermometer, Zugabegefäß, Kühler und Wasserabscheider ausgestatteten Reaktionsgefäß vorgelegt. Bei 50 bis 70°C wird das Amin unter Kühlung innerhalb von 15 bis 45 Minuten zugegeben. Anschließend wird das Reaktionswasser bei 70 bis 120°C mit Hilfe eines azeotropbildenden Lösemittels (z. B. einem Benzinkohlenwasserstoff mit einem Siedebereich 80 - 120°C) abdestilliert.

Tabelle 1

| ENAMIN | DICARBONYLVBG. TLE | | AMIN TLE | | MOLEKULARGEW. |
|---|---|---|---|---|---|
| E 1 | 100 | ACAC | 191 | AM | 99 |
| E 2 | 130 | ACE | 73 | IBA | 185 |
| E 3 | 100 | ACAC | 129 | EHA | 211 |
| E 4 | 130 | ACE | 130 | DEAPA | 242 |
| E 5 | 100 | ACAC | 102 | DMAPA | 184 |
| E 6 | 141 | ACEA | 191 | AM | 140 |

(II) Herstellung der blockierten Isocyanate

Gemäß den in der Tabelle 2 gemachten Angaben werden die Enamine als Blockierungsmittel eingesetzt. Für die Halbblockierung wird das Diisocyanat in einem geeigneten Reaktionsgefäß vorgelegt und das Enamin innerhalb von 30 bis 60 Minuten bei 20 bis 30°C gleichmäßig unter Kühlen zugegeben. Die Temperatur wird dann weiter gehalten, bis der berechnete Isocyanatwert für das Halbaddukt erreicht ist.
Zur Herstellung eines vollblockierten Polyisocyanates wird ein halbblockiertes Diisocyanat mit der entsprechenden Menge eines Polyols bei 60 bis 80°C umgesetzt. Die gleichen Bedingungen gelten auch für die direkte Vollblockierung eines Di- oder Polyisocyanates. Zur weiteren Verwendung werden die Produkte in einem Lösemittel gelöst.

Tabelle 2

| Block. IC-Vbg. | Diisocyanat Tle | (Mol) | Enamin Tle | (Mol) | Polyol Tle | (Mol) | LÖSUNG % in DGM |
|---|---|---|---|---|---|---|---|
| IC 1 | 174 TDI | (1,0) | 99 E 1 | (1,0) | – | | 70 |
| IC 2 | 222 IPDI | (1,0) | 185 E 2 | (1,0) | – | | 70 |
| IC 3 | 435 TDI | (2,5) | 528 E 3 | (2,5) | 134 TMP | (1,0) | 70 |
| IC 4 | 174 TDI | (1,0) | 242 E 4 | (1,0) | – | | 70 |
| IC 5 | 222 IPDI | (1,0) | 184 E 5 | (1,0) | – | | 70 |
| IC 6 | 666 IPDI | (3,0) | 420 E 6 | (3,0) | 149 TOLA | (1,0) | 70 |

Beispiel 1:

475 Tle EPH I werden mit 66 Tlen DEA in Anwesenheit von 232 Tlen DGM bei 100°C 2 Stunden gehalten. Nach Zugabe von 332 Tlen IC 1, 70%ig (0,85 Mol) wird der Ansatz bei 70°C bis zu einem NCO-Wert von 0 gehalten.

Beispiel 2:

228 Tle Bisphenol A (1 Mol) werden mit 130 Tlen DEAPA (1,0 Mol) und 33 Tlen F 91 bei 90 bis 120°C reagiert, bis 21 Tle Reaktionswasser durch azeotrope Destillation mit Hilfe von Toluol entfernt sind. Nach Zugabe von 230 Tlen DGM werden bei 40°C 581 Tle IC 2, 70%ig, unter Kühlung innerhalb von 20 Minuten zugegeben. Nach Ende der Zugabe sind alle NCO-Gruppen verbraucht. Der Ansatz wird mit 268 Tlen Octadecenoxid (1 Mol) und 190 Tlen EPH II versetzt und ca. 3 Stunden bei 90 bis 95°C reagiert, bis die Epoxidgruppen verbraucht sind.

Beispiel 3:

Ein nicht selbsthärtendes, Hydroxylgruppen tragendes modifiziertes Epoxid-Amin-Addukt wird in folgender Weise hergestellt:
500 Tle eines Epoxidharzes auf Basis von Bisphenol A (Epoxidäquivalentgewicht ca. 500) werden in 214 Tlen Propylenglykolmonomethylether gelöst und bei 110°C mit 83 Tlen eines Halbesters aus Phthalsäureanhydrid und 2-Ethylhexanol in Gegenwart von 0,5 g Triethylamin als Katalysator bis zu einer Säurezahl von weniger als 3 mg KOH/g reagiert. Dann werden 120 Tle eines NH-funktionellen Oxazolidins aus Aminoethylethanolamin, 2-Ethylhexylacrylat und Formaldehyd, sowie 26 Tle Diethylaminopropylamin zugefügt und der Ansatz bei 80°C bis zu einem Epoxidwert von praktisch 0 reagiert. Der Ansatz wird mit 200 Tlen Propylenglykolmonomethylether verdünnt. 70 Tle dieses Bindemittels (Festharz) werden mit 30 Tlen IC 3 (Festharz) 1 Stunde bei 50°C homogenisiert.

Beispiel 4 :

Ein in bekannter Weise aus 228 Tlen Bisphenol A, 220 Tlen Nonylphenol und 59 Tlen F 91 hergestelltes Novolakharz, welches mit 174 Tlen Propylenoxid verethert ist, wird in 200 Tlen DGM gelöst. Das Produkt enthält 3 Mol aliphatische Hydroxylgruppen. Nach Zusatz von 594 Tlen IC 4, 70 %, wird bei 60 bis 70°C bis zu einem NCO-Wert von 0 reagiert.

Beispiel 5:

475 Tle EPH I werden in 261 Tlen DGM gelöst und mit 134 Tlen Dimethylolpropionsäure in Gegenwart von 1 Tl Triethylamin als Katalysator bis zu einer Säurezahl von unter 4 mg KOH/g umgesetzt. Bei 65°C werden 870 Tle IC 4, 70 %, zugegeben und die Temperatur bis zu einem NCO-Wert von 0 gehalten.

Beispiel 6 :

945 Tle einer 55%igen Lösung in EGLAC eines Polyesters aus 0,5 Mol Isophthalsäure, 1,0 Mol TMP, 0,7 Mol Adipinsäure und 0,7 Mol 1,6-Hexandiol (Säurezahl unter 5 mg KOH/g, Hydroxylzahl ca. 280 mg KOH/g) werden bei 65 bis 70°C mit 580 Tlen IC 5, 70 %, bis zu einem NCO-Wert von 0 umgesetzt.

Beispiel 7 :

70 Tle (Festharz) eines Expoxidharz-Amin-Adduktes, hergestellt aus 475 Tlen EPH I und 105 Tlen Diethanolamin in 70%iger Lösung in DGM, werden mit 30 Tlen (Festharz) IC 6 eine Stunde bei 50°C homogeniert.

Prüfung der Bindemittel gemäß Beispiel 1 bis 7

In der Tabelle 3 ist die zur Erzielung einer einwandfreien Wasserverdünnbarkeit notwendige Menge Ameisensäure, sowie die zugesetzte Katalysatormenge in Gew.-% Metall, bezogen auf Festharz, angegeben. In der Spalte EBT wird die Einbrenntemperatur angegeben, bei welcher bei einer Einbrennzeit von 20 Minuten ein gegenüber 200 Doppelhüben mit Methylethylketon resistenter Film erhalten wird.

Tabelle 3

| Beispiel | Millimol HCOOH/100 g Festharz | % Metall als Katalysator | EBT |
|---|---|---|---|
| 1 | 60 | 0,6 Sn | 140 |
| 2 | 60 | 0,6 Sn | 135 |
| 3 | 40 | 0,8 Sn | 150 |
| 4 | 60 | 0,6 Pb | 150 |
| 5 | 60 | 0,5 Sn | 130 |
| 6 | 70 | 0,6 Pb | 150 |
| 7 | 65 | 0,6 Sn | 140 |

**Patentansprüche für die Vertragsstaaten: DE, FR, GB, IT, NL, SE**

1. Verfahren zur Herstellung von kationischen wasserverdünnbaren Bindemitteln auf der Basis von Kondensations-, Additions- oder Polymerisationsharzen, welche Hydroxylgruppen und/oder primäre und/oder sekundäre Aminogruppen tragen, und welche als Härtungskomponente blockierte Polyisocyanatverbindungen enthalten, dadurch gekennzeichnet, daß man mit NH-funktionellen, aus C-H-aktiven Dicarbonylverbindungen und Ammoniak und/oder primären Aminen erhaltenen Enaminen, partiell blockierte Polyisocyanatverbindungen mit dem Basisharz reagiert und/oder vollständig mit diesen Enaminen blockierte Polyisocyanatverbindungen mit dem Basisharz kombiniert.

2. Verfahren nach Anspruch 1, dadurch gekennzeichnet, daß als C-H-aktive Dicarbonylverbindungen Acetylaceton oder Acetessigester oder gegebenenfalls N-substituierte Acetessigsäureamide eingesetzt werden.

3. Verfahren nach den Ansprüchen 1 und 2, dadurch gekennzeichnet, daß die Halbblockierung der Isocyanatgruppen mit den NH-funtionellen Enaminen bei Temperaturen zwischen 20 und 30°C erfolgt.

4. Verfahren nach den Ansprüchen 1 bis 3, dadurch gekennzeichnet, daß man die Vollblockierung der Isocyanatverbindungen mit den Enaminen bei 60 bis 80°C durchführt.

5. Verfahren nach den Ansprüchen 1 bis 3, dadurch gekennzeichnet, daß man für die Herstellung der Enamine primär-tertiäre Amine, vorzugsweise Dialkylaminoalkylamine einsetzt.

6. Verfahren nach den Ansprüchen 1 bis 3 und 5, dadurch gekennzeichnet, daß man die basischen Gruppen in das Polymer zur Gänze oder anteilig durch Umsetzung mit halbblockierten Diisocyanaten, deren Blockierungsmittel ein tertiäre Aminogruppen aufweisendes Enamin ist, einführt.

7. Wasserverdünnbare Bindemittel auf der Basis von Kondensations-, Additions- oder Polymerisationsharzen, welche Hydroxylgruppen und/oder primäre und/oder sekundäre Aminogruppen tragen und welche als Härtungskomponente blockierte Polyisocyanatverbindungen enthalten, dadurch gekennzeichnet, daß die Basisharze mit partiell blockierten Polyisocyanatverbindungen reagiert und/oder mit vollblockierten Polyisocyanatverbindungen kombiniert sind, wobei die Blockierung durch NH-funktionelle, aus C-H-aktiven Dicarbonylverbindungen erhaltenen Enaminen erfolgt ist.

8. Verwendung der wasserverdünnbaren Bindemittel gemäß Anspruch 7 in Lacken, insbesonders in kathodisch abscheidbaren Elektrotauchlacken.

**Patentansprüche für den Vertragsstaat: Spanien:**

1. Verfahren zur Herstellung von kationischen wasserverdünnbaren Bindemitteln auf der Basis von Kondensations-, Additions- oder Polymerisationsharzen, welche Hydroxylgruppen und/oder primäre und/oder sekundäre Aminogruppen tragen, und welche als Härtungskomponente blockierte Polyisocyanatverbindungen enthalten, dadurch gekennzeichnet, daß man mit NH-funktionellen, aus C-H-aktiven Dicarbonylverbindungen und Ammoniak und/oder primären Aminen erhaltenen Enaminen, partiell blockierte Polyisocyanatverbindungen mit dem Basisharz reagiert und/oder vollständig mit diesen Enaminen blockierte Polyisocyanatverbindungen mit dem Basisharz kombiniert.

2. Verfahren nach Anpsruch 1, dadurch gekennzeichnet, daß als C-H-aktive Dicarbonylverbindungen Acetylaceton oder Acetessigester oder gegebenenfalls N-substituierte Acetessigsäureamide eingesetzt werden.

3. Verfahren nach den Ansprüchen 1 und 2, dadurch gekennzeichnet, daß die Halbblockierung der Isocyanatgruppen mit den NH-funktionellen Enaminen bei Temperaturen zwischen 20 und 30°C erfolgt.

4. Verfahren nach den Ansprüchen 1 bis 3, dadurch gekennzeichnet, daß man die Vollblockierung der Isocyanatyerbindungen mit den Enaminen bei 60 bis 80°C durchführt.

5. Verfahren nach den Ansprüchen 1 bis 3, dadurch gekennzeichnet, daß man für die Herstellung der Enamine primär-tertiäre Amine, vorzugsweise Dialkylaminoalkylamine einsetzt.

6. Verfahren nach den Ansprüchen 1 bis 3 und 5, dadurch gekennzeichnet, daß man die basischen Gruppen in das Polymer zur Gänze oder anteilig durch Umsetzung mit halbblockierten Diisocyanaten, deren Blockierungsmittel ein tertiäre Aminogruppen aufweisendes Enamin ist, einführt.

7. Verwendung der wasserverdünnbaren Bindemittel gemäß den Ansprüchen 1 bis 6 in Lacken, insbesondere in kathodisch abscheidbaren Elektrotauchlacken.

**Claims for the Contracting States: DE, FR, GB, IT, NL, SE**

1. Process for producing cationic water-dilutable binders based on condensation, addition or polymerization resins carrying hydroxyl groups and/or primary and/or secondary amino groups and comprising blocked polyisocyanate compounds as curing component, characterized in that polyisocyanate compounds partially blocked with NH-functional enamines obtained from C–H-active dicarbonyl compounds and ammonia and/or primary amines are reacted with the base resin, and/or polyisocyanate compounds totally blocked with said enamines are combined with the base resin.

2. Process according to Claim 1, characterized in that acetylacetone or acetoacetate or optionally N-substituted acetoacetic acid amides are used as C–H-active dicarbonyl compounds.

3. Process according to Claims 1 and 2, characterized in that the semi-blocking of the isocyanate groups with the NH-functional enamines is effected at temperatures between 20 and 30°C.

4. Process according to Claims 1 to 3, characterized in that the total blocking of the isocyanate compounds with the enamines is effected at 60 to 80°C.

5. Process according to Claims 1 to 3, characterized in that primary-tertiary amines, preferably dialkylaminoalkylamines are used for producing the enamines.

6. Process according to Claims 1 to 3 and 5, characterized in that the basic groups are introduced into the polymer totally or partially by reaction with semi-blocked diisocyanates whose blocking agent is an enamine carrying tertiary amino groups.

7. Water-dilutable binders based on condensation, addition or polymerization resins carrying hydroxyl groups and/or primary and/or secondary amino groups and comprising blocked polyisocyanate compounds as curing components, characterized in that the base resins are reacted with partially blocked polyisocyanate compounds and/or are combined with totally blocked polyisocyanate compounds, the blocking being effected with NH-functional enamines obtained from C–H-active dicarbonyl compounds.

8. Use of the water-dilutable binders according to Claim 7 in paints, in particular in cathodically depositable electrodeposition paints.

**Claims for the Contracting State: Spain**

1. Process for producing cationic water-dilutable binders based on condensation, addition or polymerization resins carrying hydroxyl groups and/or primary and/or secondary amino groups and comprising blocked polyisocyanate compounds as curing component, characterized in that polyisocyanate compounds partially blocked with NH-functional enamines obtained from C–H-active dicarbonyl compounds and ammonia and/or primary amines are reacted with the base resin, and/or polyisocyanate compounds totally blocked with said enamines are combined with the base resin.

2. Process according to Claim 1, characterized in that acetylacetone or acetoacetate or optionally N-substituted acetoacetic acid amides are used as C–H-active dicarbonyl compounds.

3. Process according to Claims 1 and 2, characterized in that the semi-blocking of the isocyanate groups with the NH-functional enamines is effected at temperatures between 20 and 30°C.

4. Process according to Claims 1 to 3, characterized in that the total blocking of the isocyanate compounds with the enamines is effected at 60 to 80°C.

5. Process according to Claims 1 to 3, characterized in that primary-tertiary amines, preferably dialkylaminoalkylamines are used for producing the enamines.

6. Process according to Claims 1 to 3 and 5, characterized in that the basic groups are introduced into the polymer totally or partially by reaction with semi-blocked diisocyanates whose blocking agent is an enamine carrying tertiary amino groups.

7. Use of the water-dilutable binders according to Claim 1 to 6 in paints in particular in cathodically depositable electrodeposition paints.

**Revendications pour les Etats Contractants: DE, FR, GB, IT, NL, SE**

1. Procédé de préparation de liants cationiques diluables à l'eau à base de résines de condensation, d'addition ou de polymérisation qui portent des groupes hydroxyle et/ou des groupes amine primaires et/ou secondaires et qui contiennent comme composant de durcissement des composés de polyisocyanate bloqués, caractérisé en ce que l'on fait réagir avec la résine de base des composés de polyisocyanate partiellement bloqués avec des énamines NH-fonctionnelles, obtenues à partir de composés dicarbonylés C–H-actifs et d'ammoniac et/ou d'amines primaires et/ou l'on combine avec la résine de base des composés de polyisocyanate totalement bloqués avec ces énamines.

2. Procédé selon la revendication 1, caractérisé en ce que l'on utilise comme composés dicarbonylés C–H-actifs l'acétylacétone ou l'ester acétoacétique ou des amides de l'acide acétoacétique éventuellement N-substitués.

3. Procédé selon les revendications 1 et 2, caractérisé en ce que le semi-blocage des groupes isocyanate avec les énamines NH-fonctionnelles a lieu à des températures comprises entre 20 et 30°C.

4. Procédé selon les revendications 1 à 3, caractérisé en ce que l'on réalise le blocage total des composés d'isocyanate avec les énamines entre 60 et 80°C.

5. Procédé selon les revendications 1 à 3, caractérisé en ce que l'on utilise pour la préparation des énamines des amines primaires-tertiaires, de préférence des dialkylaminoalkylamines.

6. Procédé selon les revendications 1 à 3 et 5, caractérisé en ce que l'on introduit les groupes basiques dans le polymère totalement ou partiellement par réaction avec des diisocyanates semi-bloqués dont l'agent de blocage est une énamine présentant des groupes amine tertiaires.

7. Liants diluables à l'eau à base de résines de condensation, d'addition ou de polymérisation qui portent des groupes hydroxyle et/ou des groupes amine primaires et/ou secondaires et qui contiennent comme composants de durcissement des composés de polyisocyanate bloqués, caractérisés en ce que les résines de base réagissent avec des composés de polyisocyanate partiellement bloqués et/ou sont combinées avec des composés de polyisocyanate totalement bloqués, le blocage ayant lieu avec des énamines NH-fonctionnelles obtenues à partir de composés dicarbonylés C–H-actifs.

8. Utilisation des liants diluables à l'eau selon la revendication 7 dans les peintures, en particulier dans les peintures pour trempage électro-phorétique précipitables à la cathode.

**Revendications pour l'Etat Contractant: Espagne**

1. Procédé de préparation de liants cationiques diluables à l'eau à base de résines de condensation, d'addition ou de polymérisation qui portent des groupes hydroxyle et/ou des groupes amine primaires et/ou secondaires et qui contiennent comme composant de durcissement des composés de polyisocyanate bloqués, caractérisé en ce que l'on fait réagir avec la résine de base des composés de polyisocyanate partiellement bloqués avec des énamines NH-fonctionnelles, obtenues à partir de composés dicarbonylés C–H-actifs et d'ammoniac et/ou d'amines primaires et/ou l'on combine avec la résine de base des composés de polyisocyanate totalement bloqués avec ces énamines.

2. Procédé selon la revendication 1, caractérisé en ce que l'on utilise comme composés dicarbonylés C–H-actifs l'acétylacétone ou l'ester acétoacétique ou des amides de l'acide acétoacétique éventuellement N-substitués.

3. Procédé selon les revendications 1 et 2, caractérisé en ce que le semi-blocage des groupes isocyanate avec les énamines NH-fonctionnelles a lieu à des températures comprises entre 20 et 30°C.

4. Procédé selon les revendications 1 à 3, caractérisé en ce que l'on réalise le blocage total des composés d'isocyanate avec les énamines entre 60 et 80°C.

5. Procédé selon les revendications 1 à 3, caractérisé en ce que l'on utilise pour la préparation des énamines des amines primaires-tertiaires, de préférence des dialkylaminoalkylamines.

6. Procédé selon les revendications 1 à 3 et 5, caractérisé en ce que l'on introduit les groupes basiques dans le polymère totalement ou partiellement par réaction avec des diisocyanates semi-bloqués dont l'agent de blocage est une énamine présentant des groupes amine tertiaires.

7. Utilisation des liants diluables à l'eau selon les revendications 1 à 6 dans les peintures, en particulier dans les peintures pour trempage électro-phorétique précipitables à la cathode.